# EUROPEAN PATENT APPLICATION

(11) **EP 1 995 221 A1**
(43) Date of publication of application: **26.11.2008**
(21) Application number: 08154573.3
(22) Date of filing: 15.04.2008
(51) Int. Cl.: C02F 1/463, C02F 1/467

(54) **Method for treating waters or liquid residues and bank of electrochemical reactors for treating said waters or residues in accordance with said method**

(30) Priority: 16.04.2007 ES 200701061
(71) Applicant: Sima 11, S.L., 08290 Cerdanyola del Valles (ES)
(72) Inventor: Blasi Roma, Miguel, 08290 Cerdanyola del Valles (ES)
(74) Representative: Ponti Sales, Adelaida

(57) **Abstract**

A method and an apparatus for treating waters of liquid residues including an electrochemical pre-treatment stage (2) and a stage of electrocoagulation-flocculation with subsequent separation of flocculated solid matter (3). Physical, chemical and/or electrochemical transformation of the contaminants during the electrochemical pretreatment stage facilitates the contaminant removal by electrocoagulation-flocculation. The method includes optionally a filtering stage (1A) and an additional electrochemical treatment stage (4) performed after the removal of flocculated solid matter.

## Description

This invention relates to a process for treating waters or liquid residues and to an electrochemical reactor assembly for treating said waters or liquid residues.

### BACKGROUND OF THE INVENTION

There are available on the market a large number of processes and systems for treating wastewaters and liquid residues.

The most commonly used treatment systems are the physico-chemical and biological systems. Also known are systems of treatment by advanced oxidation which employ chemical oxidants such as ozone, UV rays or peroxides in order to reduce the levels of COD/BOD (chemical/biological oxygen demand), or electrochemical treatment systems that use electrochemical reactors to carry out reactions of electrocoagulation-flocculation and/or electro-oxidation and electro-reduction of contaminating substances.

The treatment systems described have the main disadvantage of not being valid for treating residues that contain multiple pollutants, such as leachates from landfills, waters from abattoirs, pig or cattle purines, galvanic and metallurgical waters, or other contaminated effluents.

Indeed, the physico-chemical treatment systems find little application to waters with high organic content, since they generate a large amount of sludges and do not remove the soluble organic matter or the ammonium. The biological treatment systems, on the other hand, have the disadvantage of requiring many stages for the removal of nitrogenated nutrients, and of being extremely sensitive to variations in the characteristics of the effluent, in climatology (temperature, rainfall and atmospheric pressure) and in mutations of the microbial population, which means that their performance is in practice irregular.

The advanced oxidation systems, for their part, have the disadvantage of not being applicable to large flows nor to high contaminating loads, since the cost of the oxidising reagents is very high.

The electrochemical treatment systems that employ reactors have the disadvantage that the electricity consumption levels required for carrying out the treatment of flows with high contaminant load are excessively high. This leads in practice to such electrochemical treatment systems being used as a prior step in assimilating certain industrial liquid residues into urban waste, so that their treatment is usually associated at all times with conventional treatments of, say, the biological type.

In order to achieve a treatment system and process suitable for residues with multiple contaminants, treatment processes have been described that combine electrochemical-type processes with advanced-oxidation chemical processes that basically employ ozone.

This is the case in US patent 6,960,301, which describes a wastewater treatment system that has the particular feature of combining in a single process electrocoagulation-flocculation of the previously filtered effluent, followed by advanced oxidation of said electrocoagulated and flocculated effluent, by means of chemical agents or electrochemical reactors.

The treatment system described in the aforesaid patent nevertheless presents the disadvantage of also requiring a very high consumption of oxidising chemical reagents in order to ensure reduction of the contaminant load, which means that it is not very viable economically for complex effluents with high organic loads and large flows to be treated.

### DESCRIPTION OF THE INVENTION

The objective of the present invention is to resolve the disadvantages mentioned by developing a method and a electrochemical reactor assembly for treating wastewaters or liquid residues that has the advantage of permitting any type of water or residue to be treated, including those containing multiple contaminants and a high organic load, in a fast and highly effective manner and at moderate cost.

In accordance with this objective, according to a first aspect the present invention relates to a process for treating waters or liquid residues that includes the step of substantially reducing the contaminant load of said residue by means of electrocoagulation-flocculation and subsequent separation of flocculated solid matter, and is **characterised in that** before said contaminant load reduction step a prior step of electrochemical treatment is carried out, which step includes physical, chemical and/or electrochemical transformation of the contaminant substances from said water or residue by means of at least one electrochemical reactor that includes at least one anode and at least one cathode between which said water or residue circulates, with the materials of said anode and said cathode being selected in function of the nature of said contaminant substances, so that the physical, chemical and electrochemical transformation carried out facilitates said subsequent step of substantial reduction of the contaminant load.

In the present invention, waters to be treated is taken to mean contaminated natural waters (from rivers, lakes, phreatic waters, etc.), or industrial wastewaters or sanitary wastewaters of human or animal origin (pig, cattle purines, etc.), or any mixture of said waters.

In the present invention, liquid residues is taken to mean any liquid residue which due to its characteristics in terms of proportion of water or other solvent permits the application of an electrochemical treatment by means of reactors.

Similarly, in the present invention:
physical transformation is preferably taken to mean the breakdown of large-size molecules that is carried out in the electrochemical reactor by the effect of the electrical current applied,
chemical transformation will preferably be taken to mean a catalysed partial or total oxidation in the electrochemical reactor by the oxidising agents (proceeding from the transformation of the water and salts contained in the residue) generated as said residue circulates between the plates (anode/cathode) of said reactor, or the electrochemical reduction of substances catalysed by said plates, and similarly,
electrochemical transformation will preferably be taken to mean the ionisation of substances in order to facilitate the electrocoagulation and flocculation of the following treatment step.

The method of the present invention differs from the processes of the state of the art, and especially from the process disclosed in US patent 6,960,301, in that before the treatment process proper carried out by means of electrocoagulation-flocculation, a prior stage of electrochemical treatment is carried out in which the contaminant substances are transformed by means of electrical current. Said transformation can be physical, chemical and/or electrochemical, but in any case pursues the objective of facilitating the subsequent stage of treatment in which there arises a substantial reduction of the contaminant load of the water or residue.

Thanks to the presence of the aforesaid stage of transformation in which the residue is pre-treated electrochemically the method permits the treatment of effluents with a high contaminant load in a manner that is fast and highly efficient both technically and economically.

The electrochemical pre-treatment carried out on the effluent before carrying out the reduction of contaminant load constitutes a pre-treatment phase that facilitates the subsequent process of electrocoagulation-flocculation and makes it more efficient. The subsequent stage of treatment proper can be carried out very speedily (in-line treatment) and with moderate electricity consumption, even where the flow of contaminant load is very high. The consumption of reagents is also found to be very low, since the chemical substances that the effluent itself contains can be used in the pre-treatment phase to act as precursors of electro-oxidation and electro-reduction reactions depending on the reactor used (as is known, the materials of the reactor plates are powerful continuous generators of ozone, peroxides, hydroxyl radicals, chlorine and hypochlorous acid and hypochlorite).

Another advantage of the method of the present invention in relation to the systems of the state of the art lies in the fact that during the aforesaid phase or step of electrochemical pre-treatment the effluent is partially cleansed and disinfected, which has a very positive effect on the quality of the sludges produced in the following phase of treatment.

Indeed, the oxidising agents formed in the reactors, as well as the thermal increase and molecular breakdown fostered by the electrical voltage and amperage applied in said pre-treatment phase, involve eliminating the microbial load of the effluent, which makes it easier to handle and reuse the sludges produced in the subsequent phase of treatment.

The method of the present invention also has the advantage in relation to other systems in the state of the art of being very versatile and easy to apply to any type of waters or liquid residues, allowing large volumes of water to be recovered and reused, as well as many contaminants to be removed in a single process (metals, organic substances, pesticides, ammonia, phosphorus, solids, etc.).

Preferably, the anode of the reactor with which said pre-treatment stage is carried out is an insoluble anode or a soluble anode, depending on the type of effluent to be treated. The application of soluble anodes will be particularly suitable for residues with a high content of solid particles in suspension, since in such cases it is useful to boost particularly the transformations that facilitate the subsequent electrocoagulation of said particles.

Advantageously, said pre-treatment stage also includes the stage of electrochemically preparing said water or liquid residue by adding chemical products. Said products permit the pH, conductivity and redox potential of the effluent to be adjusted, and assist the formation of oxidising agents. The products to be used can be salts, acids, bases, chlorine gas, chlorine dioxide, hypochlorite, permanganates, ferrates, peroxides, catalytic metals, ozone, oxygen, air, etc.

According to a preferred embodiment, said reactor of the pre-treatment stage includes an anode whose material is selected in order to catalyse partial or total oxidation of contaminant substances and, preferably, the stage of substantial reduction of contaminant load includes the stage of electrocoagulating and flocculating the effluent from the pre-treatment stage, and the stage of electro-oxidation the effluent from said electrocoagulation-flocculation stage, once the flocculated solids have been removed.

This embodiment is especially useful for treating waters or residues with a high organic load such as waters or liquid residues from livestock rearing operations, food processing industries, abattoirs or leachates from landfill sites, among others. The method of the present invention allows such residues to be treated very simply, speedily and at low cost, without the need to have recourse to conventional procedures of the biological and/or physico-chemical type.

According to another preferred embodiment, the anode material of the reactor in the pre-treatment stage is selected for catalysing the electrochemical reduction of contaminant substances and, advantageously, said contaminant substances are nitrates which are reduced to ammonium ions, which ammonium ions are subsequently electro-oxidised to nitrogen gas when carrying out said stage of substantial reduction of the contaminant load of the residue. This embodiment is particularly useful when the waters or residues to be treated are heavily contaminated with nitrates, since the method of the present invention permits the nitrate content of the effluent to be reduced simply, quickly and at low cost.

Preferably, said stage of electrocoagulation will be carried out by at least one electrochemical reactor that includes at least one soluble anode, such that the metallic hydroxides generated will allow coagulation of the contaminants and the formation of floccules, which will subsequently separate out of themselves or by the addition of polyelectrolytes.

Again preferably, said stage of electro-oxidation will be carried out by means of at least one electrochemical reactor that includes at least one insoluble anode whose function will be to electrochemically oxidise all the molecules, ions or soluble substances that may or may not have been partially treated in the stage of transformation. The aim in this stage of electro-oxidation is to drastically reduce the content in soluble organic matter, both that which is easily oxidisable and refractory matter, as well as other substances such as ammonium or nitrogenated compounds.

Optionally, it may be necessary to carry out before said pre-treatment stage a stage of filtering the water or liquid residue using techniques that permit solids of sizes smaller than 0.1 mm to be removed, such as microfiltration and/or ultrafiltration. In these cases, the washing water for the filters used in the filtration will preferably be treated by electrocoagulation and recirculated to the pre-treatment stage for subsequent treatment thereof. The method thus enables elimination of the contaminating residues produced using the aforesaid filtration methods, which residues must be managed separately in conventional treatment systems.

Preferably, after said stage of substantial reduction of contaminants the stage of destroying the excess of oxidising substances generated during the electrochemical treatment of the previous stages is carried out.

Advantageously, said destruction is carried out by means of contact and/or absorption catalytic filters.

Also advantageously, the washing water from said filters is recirculated to said prior stage of pre-treatment in order to be treated later.

Also optionally, said method includes a stage of recovering the hydrogen from the electrolysis of the water which is carried out in said reactors in treating said water or residue. The process thus also permits an energy source to be recovered.

In accordance with a second aspect, the present invention provides a electrochemical reactor assembly to treat waters or liquid residues according to the method claimed, which is **characterised in that** it includes at least one first reactor in order to carry out a prior electrochemical treatment of said water or residue, said first reactor being associated with at least a second electrochemical reactor, in such a way that the effluent from said first reactor is treated by electrocoagulation-flocculation in said second reactor, and in that said first reactor includes at least one anode and at least one cathode between which said water or residue circulates, with the materials of said anode and cathode being selected in function of the nature of the contaminant substances in the water or residue, in order to carry out a physical, chemical and/or electrochemical transformation of said substances that facilitates said subsequent electrocoagulation-flocculation.

The assembly of reactors of the present invention presents the advantage in relation to the other treatment systems of the state of the art that it occupies very little space and does not require civil engineering/building work. Moreover, said assembly of reactors can in most cases be placed in a container that is perfectly easily transportable to the site where the residue is generated.

Furthermore, and as noted above, the assembly of reactors claimed is very versatile, since it allows the treatment of very varied flows of waters or residues with high organic loads, and with very surprising results.

According to a preferred embodiment, said first reactor includes an anode whose material is selected in order to catalyse the partial or total electro-oxidation of said contaminant substances and, preferably, said assembly include a third electrochemical reactor to treat by electro-oxidation the effluent coming from said second reactor, once the flocculated solids have been removed.

According to another preferred embodiment, said first reactor includes an anode whose material is selected in order to catalyse the electrochemical reduction of said contaminant substances.

Advantageously, said waters or liquid residues treated by the system claimed are residues of high organic load, such as livestock rearing wastes, residues from the transformation of foods, from abattoirs, landfills, etc.

With this type of residues, the process obviates the need for a biological treatment, which would involve; high demand for industrial space, vulnerability of the system to weather changes, high cost to increase the flow to be treated, impossibility of moving it (fixed works), high reagent consumption and need for high-cost supplementary systems (physico-chemical, membranes, etc.) in order to obtain an equivalent quality of the water treated.

### BRIEF DESCRIPTION OF THE DRAWINGS

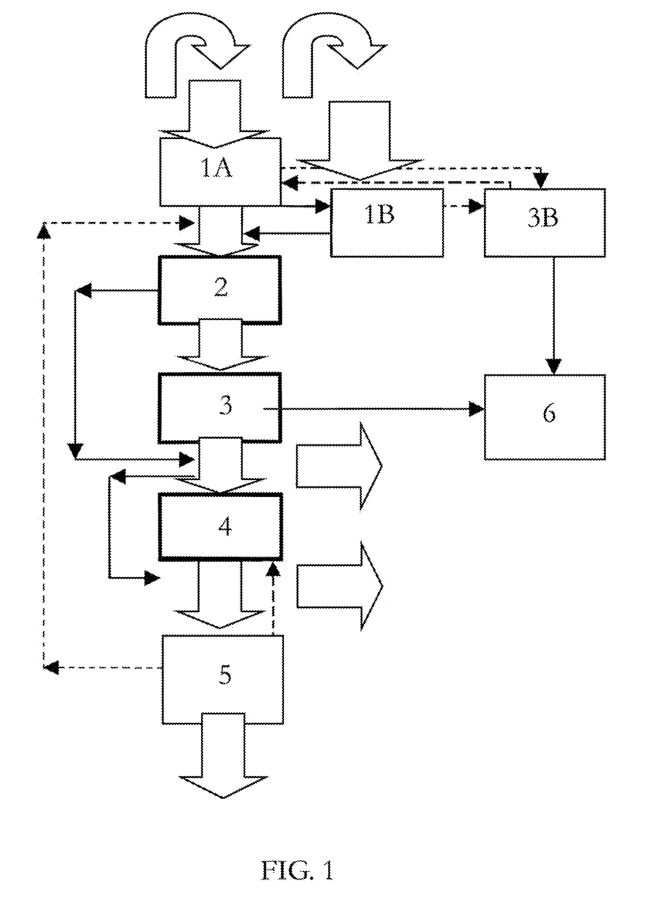

For a better understanding of all that has been outlined the block diagram of Figure 1 sets out the operation of the method and assembly of reactors, showing schematically and solely by way of non-restrictive example a practical case of embodiment that includes five main stages in said method.

### DESCRIPTION OF PREFERRED EMBODIMENTS

As noted in the description of the invention, the method and the assembly of reactors of the present invention is especially indicated for the treatment of chemically complex waters or liquid residues containing multiple contaminants, as in the case of waters and liquid residues from landfill leachates, waters from abattoirs, pig or cattle purines, waters from olive-oil manufacturing, food industries, canning and chemical-pharmaceutical industries, among others.

There follows a description by means of a block diagram of a preferred embodiment of the method of the present invention, which is applicable to the treatment of the waters and residues (hereinafter, "effluents") described in the preceding paragraph.

The method starts with filtration 1 of the effluent to be treated in order to reduce its total solids content. Said stage of filtration can consist in a simple cleaning or filtering 1A with sieves, permitting the removal of particles of a maximum size of 0.1 mm. However, depending on the size of the solids the residue contains, it may be necessary to carry out, before or after said simple filtering, a microfiltration and/or ultrafiltration 1B in order to remove solid particles smaller than 0.1 mm.

The effluent from said stage of filtration 1A, 1B enters directly into an electrochemical pre-treatment unit 2 that includes at least one electrochemical reactor in which, as commented, a physical, chemical and electrochemical transformation of the contaminant substances that the effluent includes is carried out, in order to facilitate their subsequent treatment and removal.

In the aforesaid electrochemical pre-treatment unit 2 an adjustment of the pH and conductivity of the effluent can if necessary be carried out by adding appropriate reagents or chemical products. Likewise, if necessary, in this phase 2 between 0.1% and 1% of chemical products (salts, acids, bases, chlorine gas, chlorine dioxide, hypochlorite acid, permanganates, ferrates, peroxides, catalytic metals, ozone, oxygen, air, etc.) can be added to the reactor, having the function of electrochemically conditioning the effluent to facilitate the formation of oxidising agents or reducing agents through the effect of the electrical current and of the material of the plates (anode and cathode) applied in the reactor. In most cases, however, the actual chemical substances making up the effluent are precursors of oxidising or reducing agents, depending on the type of reactor employed.

In this phase 2 of pre-treatment the aim is to transform the contaminant substances by promoting either breakdown of their molecules (physical transformation), their ionisation (electrochemical transformation) or their partial or total oxidation, or reduction (chemical transformation). In any case, said transformation pursues the objective of facilitating the subsequent stage of treatment as such, in which a substantial reduction of the contaminant load of the effluent is achieved by means of electrocoagulation-flocculation techniques.

The anode and cathode materials employed in the reactor or reactors in this transformation phase can be of two types:
➢ Materials of insoluble type, chemically stable and of long duration:
   ■ pure or alloyed graphites
   ■ chemical substances; metals or metal salts (pure and in alloy and/or supported by any metallic or graphic matrix) of the following elements (antimony, cadmium, cesium, zinc, cobalt, copper, chromium, tin, strontium, irridium, lanthanum, manganese, molybdenum, niobium, nickel, gold, silver, platinum, lead, rhodium, rhuthenium, silicon, titanium, vanadium, wolfram, doped diamond).
➢ Materials of the sacrificial anode type, soluble and of short or medium life:
   ■ iron and its alloys, aluminium and its alloys, or mixtures or these and other catalysing metals.

The configurations of the anode and of the cathode can be any from the forms of mesh, plate, cylinder, pellets, balls, flakes, etc. The amperage applied in the reactor is regulated automatically in function of the waste to be treated, but preferably ranges between 1 A/cm² and 0.01 A/cm² in order to facilitate molecular breakdown and/or ionisation of particles.

In this phase 2 the treatment in the reactor can be carried out in line or by batches, in function of the effluent load to be treated.

The effluent from the pre-treatment stage 2 described enters a treatment unit in which electrocoagulation-flocculation 3 of contaminant substances is carried out and, following that, electro-oxidation 4 of the molecules, ions, cations or soluble contaminant substances still present in the wastewaters.

In order to carry out the electrocoagulation-flocculation 3, consumable or sacrificial metallic reactors (from 1 to n) of the type described above are used, made of base material of aluminium, iron or other, or any alloys thereof, that permit the generation of metallic hydroxides that coagulate the contaminants and produce flocculates. Said flocculates separate out by themselves or by addition following electrocoagulation of a polyelectrolyte that aggregates them and permits them to be evacuated by flotation or similar systems (decantation, filtration, etc.). The sludges resulting from the process are sent for dehydration 6 by means of conventional techniques.

On exit from electrocoagulation-flocculation, the effluent has a transparent appearance and is free from solids and colloids. Alongside the elimination of solids, this phase also achieves the removal, molecular modification and destruction of a significant part of the organic matter, heavy metals, inorganic compounds, ecotoxicity and microbiological contamination. Usually, however, the effluent still possesses a high content of solid contaminating substances, for which reason an electro-oxidation treatment 4 is then provided with one or several reactors having insoluble, chemically stable anodes of long duration. This stage 4 achieves a drastic reduction of the content of soluble organic matter, both that which is easily oxidisable and the refractory matter, as well as other substances such as ammonium or nitrogenated compounds.

In stages 3 and 4, the configuration of the anode and of the cathode can be any from the forms of mesh, plate, cylinder, pellets, balls, flakes, etc. The amperage and voltage are regulated automatically in function of the type of effluent treated.

Stage 4 of electro-oxidation is followed where necessary by a stage 5 of filtration, catalysis and refining that achieves destruction of the excess oxidising molecules produced during the electrochemical process of the preceding stages (ozone, peroxides, free chlorine, chloramines, etc.). Various known techniques can be used for this purpose, among which are adsorption filters, catalysation, addition of chemical products, etc.

Surprisingly, the method of the present invention permits highly effective, low-cost treatment of very complex wastewaters or liquid residues. Indeed, unlike the systems of the state of the art, thanks to the existence of the aforesaid stage 2 of pre-electrochemical treatment by means of reactors, the treatment proper of the water or residue is very fast and does not require the use of large quantities of chemical products nor a high consumption of electrical current.

Moreover, again unlike the systems of the state of the art, the method of the present invention permits treatment of the washing waters coming from the microfiltration/ultrafiltration 1B and filtration of the final fining stage 5. In the first case, however, the washing waters are first passed through an electrocoagulation-flocculation reactor 3B in order to reduce their content in solids. The system likewise permits electro-oxidation regeneration of the mother liquors of absorbent reactivation used, if applicable, in the final stage 5.

Also surprisingly, unlike other systems of the state of the art, the method of the present invention has the advantage of being very versatile, permitting the treatment of very varied flows that range, for example, from 1 m³/week up to flows exceeding 1000 m³/day, and adjustment of the phases of the process to the needs of the water or residue. Thus, depending on the nature of the water or residue, it may in some cases not prove necessary to carry out the electro-oxidation 4, so that after the stage of electrocoagulation-flocculation 3 the water or residue can be discharged or reused. In this sense we might note that provision has been made for the assembly of reactors claimed to have means for regulating automatically whether or not it is appropriate to carry out said stage 4 of electro-oxidation, in the light of the quality of the effluent coming from the electrocoagulation-flocculation reactor.

Another advantage to be noted lies in the fact that the stage of electrochemical pre-treatment 2 means that the sludges treated and produced from the electrocoagulation-flocculation 3 stage are partially disinfected, thereby enormously facilitating handling thereof (lower risk of putrefaction and greater chance of reutilisation, including the possibility of direct agricultural application).

There follow by way of example the results of the tests carried out on five different types of waters or liquid residues. Very high performance was achieved in all cases in reducing contaminants, leaving the end waters transparent and free from colour and odour.

### Example 1: Abattoir waters; characterised by their high content in solids, bacteria, COD (chemical oxygen demand), fats and total nitrogen and ammonium.

The method comprises the stages 1 (filtration), 2 (pre-treatment), 3 (electrocoagulation-flocculation), 4 (electro-oxidation) and 5 (filtration and catalysis). Stage 2 of pre-electrochemical treatment was carried out with addition of electrochemical reagents and by means of reactors with anodes of insoluble type.

### Results:

| | Measurement Units | Parameters on entering treatment | Parameters on leaving treatment |
|---|---|---|---|
| PH | PH Units | 6.2 | 7.4 |
| conductivity | µS/cm | 2880 | 2315 |
| Matter in suspension | mg/l | 6025 | 30 |
| Decanted COD | mg O₂/l | 8763 | 114 |
| Total nitrogen | mg/l | 658.3 | 6 |
| Ammonium | mg/l | 304.7 | Less than 4 |
| Phosphorus | mg/l | 122.3 | Less than 1 |
| Oils and fats | mg/l | 3753 | 7 |

### Example 2: pig purines; high content in total nitrogen, ammonium, COD (chemical oxygen demand), phosphorus, matter in suspension, bacteria and metals

The method comprises the stages 1 (filtration), 2 (pre-treatment), 3 (electrocoagulation-flocculation), 4 (electro-oxidation) and 5 (filtration and catalysis). The pre-treatment stage 2 was carried out without addition of electrochemical reagents and by means of reactors with anodes of soluble type.

### Results:

| | Measurement Units | Parameters on entering treatment | Parameters on leaving treatment |
|---|---|---|---|
| PH | PH Units | 7.8 | 6.8 |
| conductivity | µS/cm | 24930 | 19600 |
| Matter in suspension | mg/l | 23000 | 57 |
| Total nitrogen | mg/l | 4300 | 21 |
| Ammonium | mg/l | 2750 | Less than 4 |
| COD | mg O₂/l | 18500 | 277 |
| Phosphorus | mg/l | 815 | Less than 1 |
| Zinc | mg/l | 19 | Less than 0.1 |
| Copper | mg/l | 6 | Less than 0.1 |
| Chromium | mg/l | 1,6 | Less than 0.1 |
| Nickel | mg/l | 1,7 | Less than 0.1 |

### Example 3: Landfill leachate: high content in COD (chemical oxygen demand), ammonium, conductivity, chlorides, phenols, total metals (Mn, An, As, Cd, Ni, Pb, Hg, Se, Cu, Fe).

The method comprises the stages 1 (filtration), 2 (pre-treatment), 3 (electrocoagulation-flocculation), 4 ) (electro-oxidation) and 5 (filtration and catalysis). Stage 2 of pre-treatment was carried out without addition of electrochemical reagents and by means of reactors with anodes of insoluble type.

### Results:

| | Measurement Units | Parameters on entering treatment | Parameters on leaving treatment |
|---|---|---|---|
| PH | PH Units | 8,4 | 6,6 |
| conductivity | µS/cm | 34000 | 17000 |
| COD | mg O₂/l | 8375 | 114 |
| Ammonium | mg/l | 4830 | Less than 4 |
| Chlorides | mg/l | 5200 | 2215 |
| Phenols | mg/l | 15 | Less than 0.1 |
| Total metals | mg/l | 56 | Less than 0.1 |

### Example 4: oil-mill waters (olive oil production): waters from the washing process plus centrifuge waters.

The method comprises the stages 1 (filtration), 2 (pre-treatment), 3 (electrocoagulation-flocculation), 4 (electro-oxidation) and 5 (filtration and catalysis). The pre-treatment stage 2 was carried out with addition of electrochemical reagents and by means of reactors with anodes of soluble type.

### Results:

| | Measurement Units | Parameters on entering treatment | Parameters on leaving treatment |
|---|---|---|---|
| PH | PH Units | 5.5 | 6.7 |
| conductivity | µS/cm | 4500 | 2315 |
| COD | mg O₂/l | 21000 | 117 |
| phenols | mg/l | 320 | Less than 0.1 |

### Example 5: underground waters contaminated with nitrates.

The method comprises the stages 1 (filtration), 2 (pre-treatment), 3 (electrocoagulation-flocculation), 4 (electro-oxidation) and 5 (filtration and catalysis). The pre-treatment stage 2 was carried out with addition of electrochemical reagents and by means of reactors with anodes of insoluble type that catalyse reduction of the nitrate to ammonium ion. In stage 4 the electro-oxidation of the ammonium ion to nitrogen gas was carried out.

### Results:

| | Measurement Units | Parameters on entering treatment | Parameters on leaving treatment |
|---|---|---|---|
| nitrates | mg/l | 168 | Less than 10 |

## Claims

1. Method for treating waters or liquid residues that includes the stage of substantially reducing the contaminant load of said water or residue by means of electrocoagulation-flocculation (3) and subsequent separation of flocculated solid matter, **characterised in that** before said stage of substantial reduction of the contaminant load a prior stage (2) of electrochemical treatment is carried out, which stage (2) includes a physical, chemical and/or electrochemical transformation of the contaminant substances in said water or residue by means of at least one electrochemical reactor that includes at least one anode and at least one cathode between which said water or residue circulates, with the materials of said anode and said cathode being selected in function of the nature of said contaminant substances in such a way that the physical, chemical and electrochemical transformation that is carried out facilitates said subsequent stage of reduction of the contaminant load of the water or liquid residue.

2. Method according to claim 1, **characterised in that** the anode of said reactor is an insoluble anode.

3. Method according to claim 1, **characterised in that** the anode of said reactor is a soluble anode.

4. Method according to any of the preceding claims, **characterised in that** said pre-treatment stage (2) also includes the stage of electrochemically preparing said residue by adding chemical reagents.

5. Method according to any of the preceding claims, **characterised in that** said reactor of the pre-treatment stage (2) includes an anode whose material is selected in order to catalyse partial or total electro-oxidation of said contaminant substances.

6. Method according to any of claims 1 to 4, **characterised in that** said reactor of pre-treatment stage (2) includes an anode whose material is selected in order to catalyse the reduction of said contaminant substances.

7. Method according to claim 6, **characterised in that** said anode catalyses reduction of the nitrate to ammonium ion.

8. Method according to any of the preceding claims, **characterised in that** said stage of substantial reduction of the contaminant load includes the stage of electrocoagulating and flocculating (3) the effluent from said pre-treatment stage (2), and the stage of electro-oxidising (4) the effluent from said electrocoagulation-flocculation stage (3), once the flocculated solids have been removed.

9. Method according to any of the preceding claims, **characterised in that** before said pre-treatment stage (2) a filtration (1B) of said residue is carried out by using techniques that permit solids of sizes smaller than 0.1 mm to be removed.

10. Method according to claim 9, **characterised in that** the washing water of the filters used in the stage of filtration (1B) is recirculated to said pre-treatment stage (2).

11. Method according to claim 10, **characterised in that,** before being recirculated, said washing water is electrocoagulated-flocculated (3B).

12. Method according to any of the preceding claims, **characterised in that** it includes the stage of recovering the hydrogen from electrolysis of the water, which is carried out in said reactors when treating said water or residue.

13. Electrochemical reactor assembly for treating waters or liquid residues in accordance with the method claimed, **characterised in that** it includes at least one first reactor to carry out a prior electrochemical treatment (2) of said water or residue, said first reactor being associated with at least a second electrochemical reactor, in such a way that the effluent from said first reactor is treated by electrocoagulation-flocculation (3) in said second reactor, and **in that** said first reactor includes at least one anode and at least one cathode between which said water or residue circulates, with the materials of said anode and cathode being selected in function of the nature of the contaminant substances in the water or residue, in order to carry out a physical, chemical and/or electrochemical transformation of said substances that facilitates said subsequent electrocoagulation-flocculation (3).

14. Assembly of reactors according to claim 13, **characterised in that** said first reactor includes an anode whose material is selected in order to catalyse the partial or total electro-oxidation of said contaminant substances.

15. Assembly of reactors according to claim 13, **characterised in that** said first reactor includes an anode whose material is selected in order to catalyse the electrochemical reduction of said contaminant substances.

16. Assembly of reactors according to any of claims 13 to 15, **characterised in that** it includes a third electrochemical reactor to treat by electro-oxidation (4) the effluent from said second reactor, once the flocculated solids have been removed.
